# EUROPEAN PATENT SPECIFICATION

(11) **EP 3 246 972 B1**
(45) Date of publication and mention of the grant of the patent: **05.06.2019**
(21) Application number: 15832936.7
(22) Date of filing: 14.01.2015
(51) Int. Cl.: H01M 4/505, H01M 4/485, H01M 10/0525, H01M 4/131, H01M 10/0585, H01M 10/06

(54) **NONAQUEOUS ELECTROLYTE BATTERY AND BATTERY SYSTEM**
BATTERIE MIT NICHTWÄSSRIGEM ELEKTROLYT UND BATTERIESYSTEM
BATTERIE À ÉLECTROLYTE NON AQUEUX ET SYSTÈME DE BATTERIE

(43) Date of publication of application: 22.11.2017
(73) Proprietor: Kabushiki Kaisha Toshiba, Minato-ku Tokyo 105-8001 (JP)
(72) Inventor: YAMAMOTO, Dai, Tokyo 105-8001 (JP); YOSHIKAWA, Hikaru, Tokyo 105-8001 (JP); KURIYAMA, Hiromichi, Tokyo 105-8001 (JP); MURASHI, Yasuaki, Tokyo 105-8001 (JP); SARUWATARI, Hidesato, Tokyo 105-8001 (JP)
(74) Representative: Hoffmann Eitle
(86) International application number: PCT/JP2015/050792
(87) International publication number: WO 2016/113862

(56) References cited:
- WO-A1-2009/113387
- WO-A1-2010/126677
- JP-A- 2001 176 557
- JP-A- 2001 210 324
- JP-A- 2003 086 254
- JP-A- 2011 192 562
- JP-A- 2014 006 971
- JP-A- 2014 072 062
- JP-A- 2014 177 213
- JP-A- 2014 238 946
- US-A1- 2008 166 637

## Description

### Technical Field

Embodiments of the present invention relate to a nonaqueous electrolyte battery and a battery system.

### Background Art

Lithium ion secondary batteries that are charged and discharged by movement of Li ions between a negative electrode and a positive electrode are introduced in electronic devices such as smartphones and notebook personal computers, electric vehicles (EV) and hybrid electric vehicles (HEV), and large power storage devices for stationary power generation systems such as photovoltaic power generation. A lithium ion secondary battery can be produced by, for example, housing an electrode group formed by laminating a positive electrode and a negative electrode via a separator sandwiched therebetween or an electrode group obtained by winding a laminate formed as described above in a container containing aluminum or an aluminum alloy as a material thereof, and injecting an electrolytic solution prepared by dissolving electrolytic salt containing lithium in a nonaqueous solvent into the container.

Particularly, systems using lithium ion secondary batteries in combination with lead-acid storage batteries have been developed and sold for an idling stop system and starting en engine thereafter. When such uses are assumed, lithium ion secondary batteries are desired to be able to reduce the load on lead-acid storage batteries as much as possible. More specifically, it is preferable that lithium ion secondary batteries have an operating voltage range close to that of lead-acid storage batteries and are superior in output and regeneration.

### Citation List

### Patent Literature

Patent Literature 1: Jpn. Pat. Appln. KOKAI Publication No. 2010-232187
Patent Literature 2: Jpn. Pat. Appln. KOKAI Publication No. 2005-222956
Patent Literature 3: Jpn. Pat. Appln. KOKAI Publication No. 2009-110767

WO 2009/113387 A1 discloses a lithium manganese composite oxide as electrode active material.

### Summary of Invention

### Technical Problem

An object is to provide a nonaqueous electrolyte battery capable of exhibiting excellent voltage compatibility with lead-acid storage batteries, excellent output characteristics, and excellent charge-and-discharge cycle characteristics and a battery system including the nonaqueous electrolyte battery.

### Solution to Problem

According to a first embodiment, a nonaqueous electrolyte battery is provided. The nonaqueous electrolyte battery includes a positive electrode, a negative electrode, and a nonaqueous electrolyte battery. The positive electrode includes a positive electrode layer. The positive electrode layer contains manganese composite oxide represented by a general formula of LiMn₂₋ₓMₓO₄. In this general formula, x is within the range of 0.22 ≤ x ≤ 0.7 and M is at least one element selected from a group consisting of Mg, Ti, Cr, Fe, Co, Zn, Al, and Ga. The negative electrode includes a negative electrode layer. The negative electrode layer contains lithium titanate Li₄Ti₅O₁₂. A pore specific surface area obtained by a BET method using N₂-adsorption of the positive electrode layer is 2 m²/g or more and less than 5 m²/g. A ratio of a capacity of the positive electrode per pore surface area of the positive electrode layer to a capacity of the negative electrode per pore surface area obtained by the BET method using N₂-adsorption of the negative electrode layer is within the range of 1 or more and less than 2.4.

According to a second embodiment, a battery system is provided. The battery system includes a first battery and a second battery. The first battery includes a lead-acid storage battery. The second battery includes a nonaqueous electrolyte battery according to the first embodiment.

### Brief Description of Drawings

FIG. 1 is a schematic notched perspective view of a nonaqueous electrolyte battery as an example according to a first embodiment.
FIG. 2 is a schematic sectional view of an A portion shown in FIG. 1.
FIG. 3 is a schematic plan view of a positive electrode included in the nonaqueous electrolyte battery shown in FIG. 1.
FIG. 4 is a schematic sectional view as an example of an electrode group that can be included in a nonaqueous electrolyte battery according to the first embodiment.
FIG. 5 is a schematic circuit diagram of a battery system according to a second embodiment.

### Description of Embodiments

Hereinafter, the embodiments will be described with reference to the drawings. The same reference signs are attached to common components throughout the embodiments and a duplicate description is omitted. Each diagram is a schematic view to describe each embodiment and to promote an understanding thereof and the shape, dimensions, and ratios thereof may be different from those of actual devices and the design thereof may be changed in consideration of the description that follows and publicly known technologies.

### (First Embodiment)

According to the first embodiment, a nonaqueous electrolyte battery is provided. The nonaqueous electrolyte battery includes a positive electrode, a negative electrode, and a nonaqueous electrolyte battery. The positive electrode includes a positive electrode layer. The positive electrode layer contains lithium-manganese composite oxide represented by a general formula of LiMn₂₋ₓMₓO₄. In this general formula, x is within the range of 0.22 ≤ x ≤ 0.7 and M is at least one element selected from a group consisting of Mg, Ti, Cr, Fe, Co, Zn, Al, and Ga. The negative electrode includes a negative electrode layer. The negative electrode layer contains lithium titanate Li₄Ti₅O₁₂. A pore specific surface area obtained by the BET method using N₂-adsorption of the positive electrode layer is 2 m²/g or more and less than 5 m²/g. A ratio of a capacity of the positive electrode per pore surface area of the positive electrode layer to a capacity of the negative electrode per pore surface area obtained by the BET method using N₂-adsorption of the negative electrode layer is within the range of 1 or more and less than 2.4.

When, as described above, nonaqueous electrolyte batteries are used in combination with lead-acid storage batteries, it is preferable that lithium ion secondary batteries have an operating voltage range close to that of lead-acid storage batteries and are superior in output and regeneration.

As a method of bringing the operating voltage range of nonaqueous electrolyte batteries closer to that of lead-acid storage batteries, using lithium-manganese composite oxide as a positive electrode active material and lithium-titanium composite oxide as a negative electrode active material can be cited. Further, to improve voltage compatibility with lead-acid storage batteries when the nonaquesous electrolyte batteries are connected to each other in series, it is effective that the positive electrode containing lithium-manganese composite oxide and the negative electrode containing lithium-titanium composite oxide have comparable capacities if possible.

In addition, lithium-titanium composite oxide can absorb and release lithium ions at an operating potential higher than a reduction potential of lithium and thus, deposition of lithium dendrite accompanying a rapid charge can be suppressed. As a result, even if the rapid charge is repeated, degradation in battery performance and safety can be prevented. Consequently, a nonaqueous electrolyte battery containing lithium-titanium composite oxide in the negative electrode can exhibit excellent rate characteristics. Therefore, if such nonaqueous electrolyte batteries are mounted on, for example, vehicles, energy generated by braking can efficiently be regenerated.

On the other hand, as a method of improving output characteristics, a method of increasing the pore specific surface area of the positive electrode layer can be cited, for example. As a means for increasing the pore specific surface area, for example, using lithium-manganese composite oxide whose particle size is small, adequately dispersing slurry to form an electrode layer, and deaggromerating active material particles can be cited.

However, the positive electrode layer containing lithium-manganese composite oxide and having a large pore specific surface area has a large contact area with the electrolytic solution and thus, an elution reaction of the manganese element is likely to occur. A nonaqueous electrolyte battery including such a positive electrode have a defect that accompanied repeated cycles, the battery is likely reduced in capacities.

In addition, if capacities of the positive electrode and the negative electrode are brought closer to each other to increase the battery voltage, a reduction in capacity of the positive electrode leads directly to a reduction in capacity of the battery, resulting in a defect that the battery life is likely to be shorter.

Facing these problems, the nonaqueous electrolyte battery according to the first embodiment can exhibit an excellent voltage compatibility with lead-acid storage batteries, excellent output characteristics, and excellent charge-and-discharge cycle characteristics for the following reasons.

First, in the nonaqueous electrolyte battery according to the first embodiment, the positive electrode layer contains lithium-manganese composite oxide represented by the general formula of LiMn₂₋ₓMₓO₄. When used in the positive electrode, lithium-manganese composite oxide can work as a positive electrode active material.

Lithium-manganese composite oxide represented by the general formula of LiMn₂₋ₓMₓO₄ contains an element M such that the value of x is within the range of 0.22 to 0.7. The element M is at least one element selected from a group consisting of Mg, Ti, Cr, Fe, Co, Zn, Al, and Ga. With the element M arranged in a crystal structure of lithium-manganese composite oxide, the lithium-manganese composite oxide can contain a stabilized crystal structure. Therefore, the lithium-manganese composite oxide represented by the general formula undergoes a smaller change of the crystal structure by absorption and release of lithium ions accompanying charge-and-discharge cycles. As a result, the nonaqueous electrolyte battery according to the first embodiment including the positive electrode containing such lithium-manganese composite oxide can exhibit good charge-and-discharge cycle characteristics. In addition, the nonaqueous electrolyte battery according to the first embodiment can regenerate energy more efficiently.

Also, lithium-manganese composite oxide represented by the general formula of LiMn₂₋ₓMₓO₄ has a larger lattice constant of the crystal structure and so can exhibit excellent lithium ions-receiving properties when a large current is discharged. As a result, the nonaqueous electrolyte battery according to the first embodiment can exhibit high output characteristics.

Further, the nonaqueous electrolyte battery according to the first embodiment has a pore specific surface area obtained by the BET method using N₂-adsorption of the positive electrode layer is 2 m²/g or more and less than 5 m²/g. Due to this, the positive electrode can have a large reaction-interface and exhibit good input/output characteristics. In addition, with an increased reaction-interface, the diffusion distance of lithium ions from inside the active material to the electrolytic solution can be made shorter. As a result, the nonaqueous electrolyte battery according to the first embodiment can suppress an increase in over-voltage when charge-and-discharge cycles are continued, and can increase efficiency of reaction.

On the other hand, as described above, the positive electrode included in the nonaqueous electrolyte battery according to the first embodiment can contain a stabilized crystal structure because lithium-manganese composite oxide represented by the general formula of LiMn₂₋ₓMₓO₄ contains the element M such that the value of x is within the range of 0.22 to 0.7. Therefore, even if the reaction interface of the positive electrode increases, manganese elution from the lithium-manganese composite oxide can be suppressed and as a result, excellent charge-and-discharge cycle characteristics can be exhibited.

Then, with the pore specific surface area of the positive electrode layer being within the above range and the ratio of the capacity of the positive electrode per pore surface area of the positive electrode layer to the capacity of the negative electrode per pore surface area of the negative electrode layer being within the range of 1 to 2.4, the nonaqueous electrolyte can be distributed without the nonaqueous electrolyte being unbalanced between the positive electrode and the negative electrode and the reaction interface can efficiently contribute to charge and discharge. As a result, rate characteristics can be improved.

In addition, with the ratio of the capacity of the positive electrode per pore surface area of the positive electrode layer to the capacity of the negative electrode per pore surface area of the negative electrode layer being within the above range, charge or discharge can be performed even in a final stage of charge or in a final stage of discharge while rapid changes of resistance being suppressed and as a result, the field of use of the battery can be expanded. Lithium titanate contained in the negative electrode can exhibit flat-potential behavior during charge and discharge. In a nonaqueous electrolyte battery including the negative electrode containing such lithium titanate, a cell voltage becomes strongly dependent on the potential of the positive electrode. With the expanded field of use of the battery, the range of using the positive electrode in the battery can be expanded to the higher side of the potential. As a result, the nonaqueous electrolyte battery according to the first embodiment can raise an open circuit voltage of the cell. If the open circuit voltage of the cell can be raised, particularly voltage compatibility with lead-acid storage batteries can be improved.

On the other hand, even if the field of use of the positive electrode is increased during the charge and the discharge, the nonaqueous electrolyte battery according to the first embodiment can efficiently charge and discharge within the entire operatable voltage range thanks to the pore specific surface area of the positive electrode being within the range of 2 m²/g or more and less than 5 m²/g. Therefore, the nonaqueous electrolyte battery according to the first embodiment can increase the open circuit voltage while improving rate characteristics and as a result, when used in combination with lead-acid storage batteries, the load on the lead-acid storage batteries can further be reduced.

From the above reasons, the nonaqueous electrolyte battery according to the first embodiment can exhibit high output characteristics and further exhibit excellent voltage compatibility with lead-acid storage batteries, while maintaining good cycle characteristics.

That x in the general formula of LiMn₂₋ₓMₓO₄ for lithium-manganese composite oxide is less than 0.22 means that the substitution of the element M in the lithium-manganese composite oxide LiMn₂O4 is too little. When the element substitution amount x is less than 0.22, the effect of structure stabilization in lithium-manganese composite oxide is not adequate and the lattice constant becomes smaller and as a result, adequate improvement effects of charge-and-discharge cycle characteristics and output characteristics cannot be expected. That the substitution amount x is larger than 0.7 means that the substitution amount of the element M is too much. When the element substitution amount x of the element M is more than 0.7, the ratio of Mn in lithium-manganese composite oxide decreases, and charge-and-discharge capacities are caused to reduced, leading to a lower energy density. Also in this case, a solubility limit is approached and even if the element M is added to obtain the substitution amount x larger than 0.7, improvement effects of cycle characteristics and output characteristics are low.

The substitution element M preferably contains aluminum Al. That is, lithium-manganese composite oxide contained in the positive electrode layer preferably contains aluminum.

If the pore specific surface area of the positive electrode layer is smaller than 2 m²/g, the contact area between the positive electrode and the nonaqueous electrolyte decreases and a reaction area necessary for charging and discharging is no longer sufficient, which makes it difficult to obtain excellent input/output characteristics. On the other hand, if the pore specific surface area of the positive electrode layer is 5 m²/g or more, the nonaqueous electrolyte in the nonaqueous electrolyte battery is concentrated on the positive electrode side and the nonaqueous electrolyte on the negative electrode side may be insufficient. If the nonaqueous electrolyte on the negative electrode side is insufficient, an increase in resistance occurs, which can deteriorate rate characteristics. The pore specific surface area of the positive electrode layer is preferably 3 m²/g or more and less than 5 m²/g.

If the ratio of the capacity of the positive electrode per pore surface area of the positive electrode layer to the capacity of the negative electrode per pore surface area of the negative electrode layer is smaller than 1, good output characteristics and charge-and-discharge cycle characteristics as described above cannot be exhibited. As such a case, the following cases can be considered.

As a first case, a case is cited when the positive electrode capacity is too small when compared with the negative electrode capacity. This can be considered a case when the chargeable/dischargeable capacity per weight of lithium-manganese composite oxide contained in the positive electrode is small or a case when the weight of the positive electrode layer is too small when compared with the weight of the negative electrode layer when the battery is produced. In both cases, the capacity that can be charged/discharged by the negative electrode is too large when compared with the capacity that can be charged/discharged by the positive electrode and thus, a portion that does not contribute to a reaction in the nonaqueous electrolyte battery is present in the negative electrode and the energy density of the battery decreases. Further, in this case, the load of charge-and-discharge on the positive electrode is too high and cycle characteristics may be degraded. If the chargeable/dischargeable capacity per weight of lithium-manganese composite oxide contained in the positive electrode is small, movement of lithium ions in a charge or discharge reaction is likely to be inhibited, which can cause an increased resistance and degraded rate characteristics.

As a second case, a case is cited when the pore specific surface area of the positive electrode is too large. One possible cause is that when the positive electrode is produced, slurry is excessively dispersed and a conductive agent having a larger pore specific surface area than that of lithium-manganese composite oxide as a positive electrode active material is excessively mixed. In this case, most of the nonaqueous electrolyte is concentrated on the positive electrode side, leading to degraded rate characteristics. In addition, if the conductive agent is excessively mixed, the ratio of active material contributing to the charge and the discharge of the battery is decreased, leading to a substantially lower energy density. Thus, it is not preferable that the conductive agent is excessively contained in the positive electrode layer.

As a third case, a case is cited when the pore specific surface area of the negative electrode is too small. As possible causes, a case when the primary particle size and secondary particle size of lithium titanate contained in the negative electrode layer are too large, a case when an aggregation of particles occurs, or a case when dispersion when slurry of the negative electrode is produced is insufficient can be considered. Regardless of the causes, if the pore specific surface area of the negative electrode is too small, the reaction interface decreases and also the diffusion distance of lithium ions in the active material becomes longer. As a result, rate characteristics may be degraded.

If the ratio of the capacity of the positive electrode per pore surface area of the positive electrode layer to the capacity of the negative electrode per pore surface area of the negative electrode layer is 2.4 or more, good rate characteristics and cycle characteristics as described above cannot be exhibited. As such a case, the following cases can be considered.

As a first case, a case can be considered when the negative electrode capacity is too small when compared with the positive electrode capacity. This can be considered a case when the chargeable/dischargeable capacity per weight of lithium titanate contained in the negative electrode is small or a case when the weight of the negative electrode layer is too small when compared with the weight of the positive electrode layer when the battery is produced. In both cases, a portion that does not contribute to a reaction in the nonaqueous electrolyte battery is present in the positive electrode and the energy density of the battery decreases. If the chargeable/dischargeable capacity per weight of lithium titanate contained in the negative electrode is small, movement of lithium ions in a charge and discharge reaction is likely to be inhibited, which can cause an increased resistance and degraded rate characteristics.

As a second case, a case is cited when the pore specific surface area of the positive electrode is too small. As possible causes, for example, a case when the dispersion of slurry of the positive electrode is insufficient, a case when particles of lithium-manganese composite oxide are aggregated, and a case when a binder that reduces the pore specific surface area is excessively mixed in the positive electrode layer can be considered. In any of these cases, the reaction interface is not adequately formed during charging or discharge and rate characteristics may be degraded.

As a third case, a case is cited when the pore specific surface area of the negative electrode layer is too large. As possible causes, for example, a case when the primary particle size and/or the secondary particle size of lithium titanate contained in the negative electrode are too small and a case when the dispersion when slurry of the negative electrode is produced is too excessive can be considered. In any of these cases, the nonaqueous electrolyte in the nonaqueous electrolyte battery is concentrated on the negative electrode side and the nonaqueous electrolyte in the positive electrode layer may be insufficient so that rate characteristics may be degraded.

The ratio of the capacity of the positive electrode per pore surface area of the positive electrode layer to the capacity of the negative electrode per pore surface area of the negative electrode layer is preferably within the range of 1.3 or more and less than 2.0.

The capacity of the positive electrode per pore surface area of the positive electrode layer is preferably 15 mAh/m² or more and less than 35 mAh/m² and more preferably 18 mAh/m² or more and less than 30 mAh/m². The capacity of the negative electrode per pore surface area of the negative electrode layer is preferably 5 mAh/m² or more and less than 15 mAh/m² and more preferably 10 mAh/m² or more and less than 15 mAh/m².

Next, a nonaqueous electrolyte battery according to the first embodiment will be described in more detail.

The nonaqueous electrolyte battery according to the first embodiment includes a positive electrode, a negative electrode, and a nonaqueous electrolyte.

The positive electrode includes a positive electrode layer. The positive electrode can further include a positive electrode current collector. The positive electrode layer may be supported on the positive electrode current collector.

The positive electrode current collector may be, for example, a strip member containing a metal or an alloy. The positive electrode current collector can support the positive electrode layer on each side or one side thereof. The positive electrode current collector can contain a portion that does not support the positive electrode layer on any side and the portion can act as a positive electrode lead.

The positive electrode layer can contain a positive electrode active material. Lithium-manganese composite oxide can be contained in the positive electrode active material. The positive electrode active material can contain other positive electrode active material than lithium-manganese composite oxide. The positive electrode layer can further contain a conductive agent and a binder. The negative electrode includes a negative electrode layers The negative electrode can further include a negative electrode current collector. The negative electrode layer may be supported on the negative electrode current collector.

The negative electrode current collector may be, for example, a strip member containing a metal or an alloy. The negative electrode current collector can support the negative electrode layer on each side or one side thereof. The negative electrode current collector can contain a portion that does not support the negative electrode layer on any side and the portion can act as a negative electrode lead.

The negative electrode can contain a negative electrode active material. Lithium titanate can be contained in the negative electrode active material. The negative electrode active material can contain other negative electrode active material than lithium titanate. The negative electrode layer can further contain a conductive agent and a binder.

A nonaqueous electrolyte battery according to the first embodiment may include a plurality of positive electrodes and a plurality of negative electrodes. One or more positive electrodes and one negative electrode can be laminated so that the positive electrode layer and the negative electrode layer face each other via, for example, a separator, to constitute an electrode group. For example, the electrode group may be impregnated with the nonaqueous electrolyte.

The nonaqueous electrolyte battery according to the first embodiment can further include a container. The container can house the electrode group and the nonaqueous electrolyte.

The nonaqueous electrolyte battery according to the first embodiment can further include a positive electrode current collecting tab electrically connected to the positive electrode lead and a negative electrode current collecting tab electrically connected to the negative electrode lead. The positive electrode current collecting tab and the negative electrode current collecting tab can also act as a positive electrode terminal and a negative electrode terminal by being led out of the container respectively. Alternatively, the positive electrode current collecting tab and the negative electrode current collecting tab can be connected to the positive electrode terminal and the negative electrode as separate members, respectively.

Next, each member that can be included in the nonaqueous electrolyte battery according to the first embodiment will be described in more detail.

### (1) Positive Electrode

The positive electrode active material contained in the positive electrode layer may contain lithium-manganese composite oxide alone or further contain lithium-nickel composite oxide or lithium-cobalt composite oxide or the like.

The positive electrode active material may be, for example, particles. The positive electrode active material preferably has the average particle size in the particle size distribution obtained by the laser diffraction scattering method within the range of 5 µm or more and less than 20 µm. With a decreasing average particle size, the pore specific surface area of the produced positive electrode layer can be increased. Thus, the average particle size is preferably in the range of 20 µm or less. On the other hand, if the average particle size is made too small, the reaction interface may decrease due to aggregation. Thus, the average particle size is preferably 5 µm or more.

The conductive agent may be contained in the positive electrode layer for the purpose of, for example, securing electrical conductivity among positive electrode active materials and reducing contact resistance between the positive electrode active material and the positive electrode current collector. The conductive agent that can be contained in the positive electrode layer preferably contains a carbon material. A conductive agent containing a carbon material can provide more excellent conductive paths. As carbon materials, for example, acetylene black, ketjen black, furnace black, graphite, and carbon nanotube can be cited. The positive electrode layer can contain one or two or more of the above carbon materials or further contain other conductive agents.

With an increasing amount of conductive agent added to the positive electrode layer, the surface of the positive electrode active material is coated with the conductive agent more easily and the pore specific surface area tends to become smaller. On the other hand, if the amount of added conductive agent is small, a degree of dispersion for the positive electrode active material is decreased and the pore specific surface area tends to become smaller. Further, if the conductive agent is insufficient, electrical conductivity of the positive electrode layer is no longer sufficient and thus, an unbalanced reaction may occur during charge and/or discharge, leading to an increased resistance. In consideration of the above, the amount of added conductive agent is preferably within the range of 2% or more and less than 15% with respect to the weight of the positive electrode active material. It is also preferable that the average particle size of the conductive agent is normally equal to or less than the average particle size of the positive electrode active material and the pore specific surface area thereof is larger than that of the positive electrode active material.

The binder is used, for example, to bind positive electrode active materials and also to bind the positive electrode active material and positive electrode current collector. The binder that can be contained in the positive electrode active material is not particularly limited. For example, a polymer having a good dispersibility in a mixing solvent for slurry preparation can be used as the binder. Such a polymer, for example, includes polyvinylidene fluoride, hexafluoropropylene, and polytetrafluoroethylene can be cited.

With an increasing amount of added binder to the positive electrode layer, dispersibility of particles of the positive electrode active material in the positive electrode tends to improve. However, if the amount of the binder is too much, the surface of particles of the positive electrode active material are more likely to be coated with the binder, leading to a smaller pore specific surface area of the positive electrode layer. On the other hand, if the amount of added binder is small, particles of the positive electrode active material are more likely to aggregate, leading to a smaller pore specific surface area of the positive electrode layer. Further, if the amount of added binder is small, binding properties among particles become weaker, which is not preferable because peeling from the positive electrode current collector or breaking of the positive electrode layer may occur. In consideration of the above, the amount of added binder is preferably within the range of 1% or more and less than 10% with respect to the weight of the positive electrode active material.

As the positive electrode current collector, for example, metal foil containing aluminum, copper or the like can be used.

The positive electrode can be produced by, for example, the following method. First, lithium-manganese composite oxide, any other active material, a conductive agent, and any binder are input into an appropriate solvent to obtain a mixture. Subsequently, the obtained mixture is input into a stirring machine. The mixture is stirred by the stirring machine to obtain slurry. The positive electrode can be produced by coating the positive electrode current collector with the slurry obtained as described above and drying the coated film and then pressing the coated film.

The pore specific surface area of the positive electrode layer is affected by, for example, the particle size of the positive electrode active material input as a raw material, the amount of added binder, the particle size and amount of added conductive agent, and dispersion conditions of the slurry. The pore specific surface area of the positive electrode layer can be adjusted to satisfy the above conditions by adjusting the condition for stirring a mixture, the particle size of the positive electrode active material, and amounts of added binder and conductive agent contained in the positive electrode slurry like, for example, as in Examples shown below.

Methods for controlling the average particle size of the positive electrode active material include the composition and particle size of the starting material, sintering conditions, and the grinding method and conditions therefor. Of these methods, a plurality of methods may appropriately be combined until a predetermined pore specific surface area is obtained.

Particles of the positive electrode active material can be dispersed uniformly by adjusting stirring conditions (the dispersion method, stirring time, and stirring temperature) of the positive electrode slurry to inhibit aggregation of particles of the positive electrode active material.

### (2) Negative Electrode

Lithium titanate contained in the negative electrode layer is lithium titanate Li₄Ti₅O₁₂ having a spinel structure.

The conductive agent and the binder that can be contained in the positive electrode layer can be used as the conductive agent and the binder that can be contained in the negative electrode layer.

The negative electrode can be produced by, for example, the following method. First, lithium titanate, a conductive agent, and a binder are mixed. The mixture thus obtained is input into a solvent to prepare slurry. A negative electrode current collector is coated with the slurry, and the coated film is dried and then pressed. In this manner, the negative electrode can be produced. The pore specific surface area of the negative electrode layer can be adjusted to satisfy the above conditions by adjusting, for example, the condition for stirring a mixture, the particle size of lithium titanate, and amounts of added binder and conductive agent contained in the negative electrode slurry like as in Examples shown below.

By controlling the average particle size of the negative electrode active material, the ratio of the capacity of the positive electrode per pore surface area of the positive electrode layer to the capacity of the negative electrode per pore surface area of the negative electrode layer can be also controlled to be within the range of 1 or more and less than 2.4. The average particle size of the negative electrode active material can be controlled in the same manner as that of the positive electrode active material.

### (3) Separator

The separator is not particularly limited and, for example, a microporous film, woven fabric, nonwoven fabric, or a laminate of the same material or different material among these materials can be used. Materials forming the separator may include polyethylene, polypropylene, ethylene-propylene copolymer, ethylene-butene copolymer, and cellulose.

### (4) Electrode Group

The structure of an electrode group formed from the positive electrode, the negative electrode, and the separator described above is not particularly limited. For example, the electrode group can adopt a stack-type structure in which positive electrodes and negative electrodes are alternately laminated via a separator. Alternatively, the electrode group can have a coiled-type structure. A coiled-type electrode group can be obtained by, for example, laminating one or more positive electrode and one or more negative electrodes with a separator sandwiched therebetween to obtain a laminate and coiling the laminate.

### (5) Nonaqueous Electrolyte

The nonaqueous electrolyte can be prepared by dissolving an electrolyte, for example, lithium salt in a nonaqueous solvent.

Nonaqueous solvents may include, for example, ethylene carbonate (EC), propylene carbonate (PC), butylene carbonate (BC), dimethyl carbonate (DMC), diethyl carbonate (DEC), ethylmethyl carbonate (EMC), γ-butyrolactone (γ-BL), sulfolane, acetonitrile, 1,2-dimethoxy-ethane, 1,3-dimethoxy-propane, dimethyl ether, tetrahydrofuran (THF), and 2-methyltetrahydrofuran. The nonaqueous solvent may be used alone or by mixed solvent of two nonaqueous solvents or more.

As the electrolyte, for example, lithium salt such as lithium perchlorate (LiClO₄), lithium hexafluorophosphate (LiPF₆), lithium tetrafluoroborate (LiBF₄), lithium hexafluoroarsenide (LiAsF₆), and lithium trifluoromethanesulfonate (LiCF₃SO₃) can be cited. The electrolyte may be used alone or as mixture of two electrolytes or more.

The amount dissolution of the electrolyte in a nonaqueous solvent is desirably 0.5 mol/L to 3 mol/L. If the concentration of the electrolyte is too low, sufficient ionic conductivity may not be obtainable. On the other hand, if the concentration of the electrolyte is too high, the electrolyte may not be completely dissolvable.

### (6) Other Members

As material for the container, for example, aluminum, aluminum alloys, iron (Fe), aluminum-containing laminate films, nickel (Ni)-plated iron, stainless steel (SUS) can be used.

The positive electrode current collecting tab, the negative electrode current collecting tab, the positive electrode terminal, and the negative electrode terminal are desirably formed from, for example, aluminum or an aluminum alloy.

Next, the method for measuring the capacity and the pore specific surface area of the positive electrode and the capacity and the pore specific surface area of the negative electrode included in a nonaqueous electrolyte battery will be described.

### <Providing of Nonaqueous Electrolyte Battery to be examined and Preparation of Samples>

First, the nonaqueous electrolyte battery to be examined is provided. The nonaqueous electrolyte battery to be examined is a battery having a capacity of 80% or more of the nominal capacity. The state of charge of the battery may be any state.

The capacity retention ratio of the battery is determined by the following method. First, the battery is charged up to the upper limit of operating voltage. The current value during the charging is a current value corresponding to a 1 C rate determined from the nominal capacity. After the upper limit of operating voltage is reached, the voltage is maintained for three hours. After the charging and maintenance of the voltage, the battery is discharged up to the lower limit of operating voltage at the 1 C rate. The above cycle of the charge and the discharge is repeated three times and the discharge capacity obtained at the third additional cycle is recorded. The ratio of the obtained discharge capacity to the nominal capacity is defined as the capacity retention ratio.

Next, to prevent a reaction of the structural elements of the battery with atmospheric components or moisture when the battery is disassembled, for example, the battery is placed in an inert gas atmosphere like in a glove box of an argon gas atmosphere. Next, the nonaqueous electrolyte battery is opened in such a glove box. For example, the nonaqueous electrolyte battery is opened by cutting heat-sealed portions near the positive electrode current collecting tab and the negative electrode current collecting tab respectively. The electrode group is taken out from the opened nonaqueous electrolyte battery. If the taken-out electrode group includes the positive electrode lead and the negative electrode lead, the positive electrode lead and the negative electrode lead are cut while taking care not to allow the positive and negative electrodes to short-circuit.

Next, the taken-out electrode group is disassembled into the positive electrode, the negative electrode, and the separator. Then, the weight of the positive electrode is measured. Then, the positive electrode is cut into, for example, portions of 3 cm square. The cut portions are used as positive electrode samples.

### <Measurement of Capacity and Pore Specific Surface Area of Positive Electrode>

Next, the weight of the positive electrode sample is measured. After the measurement, a two-pole or three-pole electrochemical measuring cell using the positive electrode sample as a working electrode and lithium metal foils for a counter electrode and a reference electrode is fabricated. The fabricated electrochemical measuring cell is charged up to a working electrode potential of 4.3 V. The current value during the charge is a value obtained by multiplying the ratio of the weight of the positive electrode sample to the weight of the positive electrode of the battery by the nominal capacity of the battery. After the working electrode potential of 4.3 V is reached, the potential of the working electrode is maintained unchanged for three hours. After the charging and the maintenance of the potential, the cell is discharged until the potential of the working electrode becomes 3.0 V at the same current value as that used for the charging. The above cycle of the charge and the discharge is repeated three times and the discharge capacity obtained at the third additional cycle is recorded. The recorded discharge capacity is the discharge capacity of the positive electrode sample.

Next, the positive electrode sample is taken out from the electrochemical measuring cell and washed by a solvent. As the solvent, chain carbonate (such as dimethyl carbonate, ethylmethyl carbonate, diethyl carbonate) or acetonitrile can be used. After the washing, a vacuum is produced while maintaining the inert gas atmosphere to dry the positive electrode sample in the atmosphere. The positive electrode sample can be dried, for example, in a vacuum at 50°C for 10 hours.

Next, the positive electrode layer in the dried positive electrode sample is removed from the current collector to gather a sample of the positive electrode layer. In this case, the positive electrode layer is removed such that the surface of the positive electrode current collector is exposed. Next, the weight of the sample of the removed positive electrode layer is measured.

Next, the weighed sample of the positive electrode layer is introduced into a BET pore specific surface area adsorption apparatus to measure the pore specific surface area. For example, the BET pore specific surface area analyzer manufactured by Yuasa-Ionics is used and a nitrogen gas is used as an adsorption gas. In this manner, the pore specific surface area of the positive electrode layer can be obtained.

In addition, the discharge capacity of the positive electrode per gram of the weight of the positive electrode layer can be obtained by dividing the discharge capacity previously-measured of the positive electrode sample by the weight of the sample of the positive electrode layer previously-removed.

The capacity of the positive electrode per pore surface area of the positive electrode layer can be obtained by dividing the discharge capacity of the positive electrode per gram of the weight of the positive electrode layer by the pore specific surface area previously-measured for the positive electrode layer.

### <Measurement of Capacity and Pore Specific Surface Area of Negative Electrode>

The negative electrode is taken out from the battery previously-disassembled to produce a negative electrode sample. And then, by following the same procedures for the sample as those of the positive electrode, the discharge capacity of the negative electrode per gram of the weight of the negative electrode layer and the pore specific surface area of the negative electrode layer are measured. However, in the measurement of the discharge capacity of the negative electrode sample, the charge potential is set to 1.0 V and the discharge potential is set to 2.5 V.

The capacity of the negative electrode per pore surface area of the negative electrode layer can be obtained by dividing the obtained discharge capacity of the negative electrode per gram of the weight of the negative electrode layer by the pore specific surface area of the negative electrode layer.

### <Calculation of Ratio of Positive Electrode Capacity per Pore Surface Area of Positive Electrode Layer to Negative Electrode Capacity per Pore Surface Area of Negative Electrode Layer>

By dividing the capacity of the positive electrode per pore surface area of the positive electrode layer obtained as described above by the capacity of the negative electrode per pore surface area of the negative electrode layer, the ratio of the capacity of the positive electrode per pore surface area of the positive electrode layer to the capacity of the negative electrode per pore surface area of the negative electrode layer can be calculated.

Next, an example of the procedure for obtaining a particle size distribution of the positive electrode layer by the laser diffraction scattering method will be described.

A sample of the positive electrode layer is sampled from the nonaqueous electrolyte battery in the same manner as the method described above. The powder sample thus obtained of the positive electrode layer is input into the measuring cell filled with N-methylpyrolidone until a measurable concentration is reached. Should be noted that the volume and measurable concentration of the measuring cell are different depending on the particle size distribution measuring apparatus.

Next, the measuring cell containing N-methylpyrolidone and the sample of the positive electrode layer dissolved therein is irradiated with ultrasonic waves of output of 40 W for five minutes. According to such irradiation of ultrasonic waves, the aggregated conductive agent particles and active material particles can be separated.

The measuring cell treated with ultrasonic waves is loaded into the particle size distribution measuring apparatus using the laser diffraction scattering method to measure the particle size distribution. Microtrac 3100 can be cited as an example of the particle size distribution measuring apparatus. In this manner, the particle size distribution of the positive electrode layer can be obtained.

Next, a nonaqueous electrolyte battery according to the first embodiment will be more specifically described with reference to the drawings.

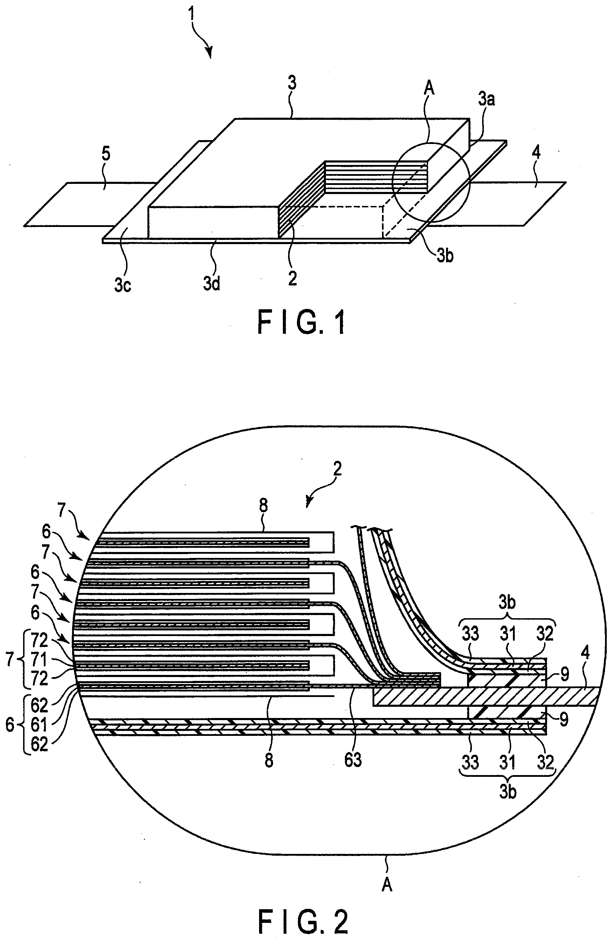

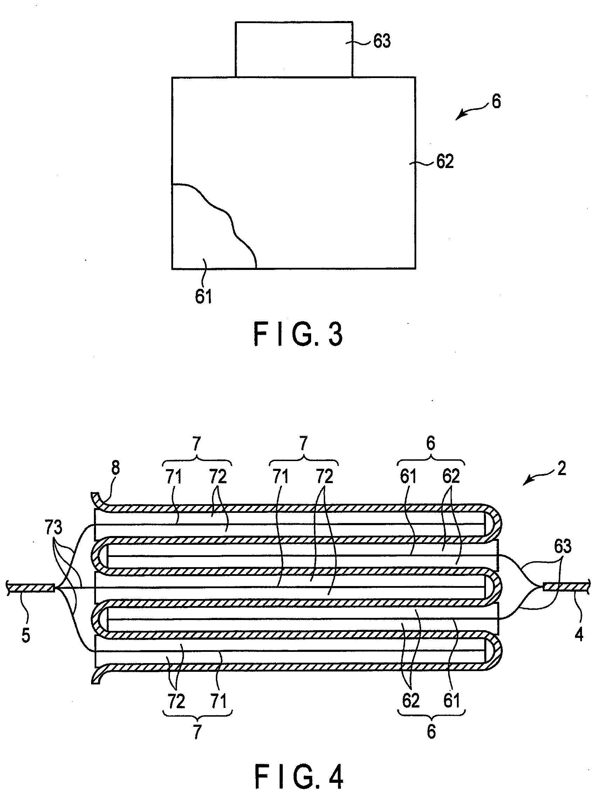

FIG. 1 is a schematic notched perspective view of a nonaqueous electrolyte battery as an example according to the first embodiment. FIG. 2 is a schematic sectional view of an A portion shown in FIG. 1. FIG. 3 is a schematic plan view of a positive electrode included in the nonaqueous electrolyte battery shown in FIG. 1.

A nonaqueous electrolyte battery 1 of a first example shown in FIGS. 1 to 3 includes an electrode group 2 shown in FIGS. 1 and 2, a container 3 shown in FIGS. 1 and 2, a positive electrode current collecting tab 4 shown in FIGS. 1 and 2, and a negative electrode current collecting tab 5 shown in FIG. 1.

The electrode group 2 shown in FIGS. 1 and 2 includes a plurality of positive electrodes 6, a plurality of negative electrodes 7, and a separator 8.

The positive electrode 6 includes, as shown in FIGS. 2 and 3, a positive electrode current collector 61 and a positive electrode layer 62 formed on each side of the positive electrode current collector 61. Also, as shown in FIGS. 2 and 3, the positive electrode current collector 61 contains a portion 63 where the positive electrode layer 62 is not formed on the surface and the portion 63 acts as a positive electrode lead. As shown in FIG. 3, the positive electrode lead 63 is a narrow portion narrower than the positive electrode layer 62 in width.

The negative electrode 7 includes, as shown in FIG. 2, a negative electrode current collector 71 and a negative electrode layer 72 formed on each side of the negative electrode current collector 71. Though not illustrated, the negative electrode current collector 71 contains a portion where the negative electrode layer 72 is not formed on the surface and the portion acts as a negative electrode lead.

As shown in FIG. 2, the separator 8 is zigzag-folded. The positive electrode 6 or the negative electrode 7 is arranged in each of spaces specified by surfaces opposite to each other of the zigzag-folded separator 8. Accordingly, as shown in FIG. 2, the positive electrodes 6 and the negative electrodes 7 are laminated such that the positive electrode layer 62 and the negative electrode layer 72 are opposed to each other with the separator 8 being sandwiched therebetween. In this manner, the electrode group 2 is formed.

The positive electrode leads 63 of the electrode group 2 extend, as shown in FIG. 2, from the electrode group 2. As shown in FIG. 2, these positive electrode leads 63 are put together and connected to the positive electrode current collecting tab 4. Though not illustrated, the negative electrode leads of the electrode group 2 also extend from the electrode group 2. These negative electrode leads are, though not illustrated, put together and connected to the negative electrode current collecting tab 5 shown in FIG. 1.

As shown in FIGS. 1 and 2, the electrode group 2 as described above is housed in the container 3.

The container 3 is formed from an aluminum-containing laminate film of aluminum foil 31 and resin films 32 and 33 formed on both sides thereof. The aluminum-containing laminate film forming the container 3 is folded using a folding portion 3d as a fold such that the resin film 32 face to inside to house the electrode group 2. Also, as shown in FIGS. 1 and 2, the container 3 sandwiches the positive electrode current collecting tab 4 in an edge portion 3b thereof. Similarly, the container 3 sandwiches the negative electrode current collecting tab 5 in an edge portion 3c thereof. Accordingly, the positive electrode current collecting tab 4 and the negative electrode current collecting tab 5 extend in mutually opposite directions from the container 3.

Edge portions 3a, 3b, 3c of the container 3, excluding portions sandwiching the positive electrode current collecting tab 4 and the negative electrode current collecting tab 5, are heat-sealed by fusion-bonding of the resin films 32 opposite to each other.

In the nonaqueous electrolyte battery 1, as shown in FIG. 2, an insulating film 9 is provided between the positive electrode current collecting tab 4 and the resin film 32 to improve bonding strength between the positive electrode current collecting tab 4 and the resin film 32. Also in the edge portion 3b, the positive electrode current collecting tab 4 and the insulating film 9 are heat-sealed by fusion-bonding and the resin film 32 and the insulating film 9 are heat-sealed by fusion-bonding. Similarly, though not illustrated, the insulating film 9 is also provided between the negative electrode current collecting tab 5 and the resin film 32. Also in the edge portion 3c, the negative electrode current collecting tab 5 and the insulating film 9 are heat-sealed by fusion-bonding and the resin film 32 and the insulating film 9 are heat-sealed by fusion-bonding. That is, in the nonaqueous electrolyte battery 1 shown in FIGS. 1 to 3, all of the edge portions 3a, 3b, 3c of the container 3 are heat-sealed.

The container 3 further houses a nonaqueous electrolyte (not shown). The electrode group 2 is impregnated with the nonaqueous electrolyte.

In the nonaqueous electrolyte battery 1 shown in FIGS. 1 to 3, as shown in FIG. 2, a plurality of the positive electrode leads 63 is put together in the lowest layer of the electrode group 2. Similarly, though not illustrated, a plurality of negative electrode leads is put together in the lowest layer of the electrode group 2. However, as shown, for example, in FIG. 4, the plurality of positive electrode leads 63 and the plurality of negative electrode leads 73 may be put together near a middle level of the electrode group 2 and connected to the positive electrode current collecting tab 4 and the negative electrode current collecting tab 5 respectively.

In a nonaqueous electrolyte battery according to the first embodiment, a positive electrode layer of a positive electrode contains lithium-manganese composite oxide represented by the general formula of LiMn₂₋ₓMₓO₄ and a negative electrode layer of a negative electrode contains lithium titanate Li₉Ti₅O₁₂. Also, in the nonaqueous electrolyte battery according to the first embodiment, a pore specific surface area obtained by the BET method using N₂-adsorption for the positive electrode layer is 2 m²/g or more and less than 5 m²/g. The ratio of the capacity of the positive electrode per pore specific surface area of the positive electrode layer to the capacity of the negative electrode per pore specific surface area obtained by the BET method using N₂-adsorption of the negative electrode layer is within the range of 1 or more and less than 2.4. As a result, a nonaqueous electrolyte battery according to the first embodiment can exhibit excellent voltage-compatibility with lead-acid storage batteries, excellent output characteristics, and excellent charge-and-discharge cycle characteristics.

### (Second Embodiment)

According to the second embodiment, a battery system is provided. The battery system includes a first battery and a second battery. The first battery includes a lead-acid storage battery. The second battery includes a nonaqueous electrolyte battery according to the first embodiment.

As described above, a nonaqueous electrolyte battery according to the first embodiment can exhibit excellent voltage-compatibility with lead-acid storage batteries, excellent output characteristics, and excellent charge-and-discharge cycle characteristics. Particularly, the nonaqueous electrolyte battery according to the first embodiment has an extended region in which the nonaqueous electrolyte battery can be used at operatable voltages for a lead-acid storage battery and thus, when used in combination with a first battery containing a lead-acid storage battery, an excessive load on the first battery can be prevented. As a result, a battery system according to the second embodiment can exhibit excellent output characteristics and excellent charge-and-discharge cycle characteristics.

Next, an example of the battery system according to the second embodiment will be specifically described with reference to the drawings.

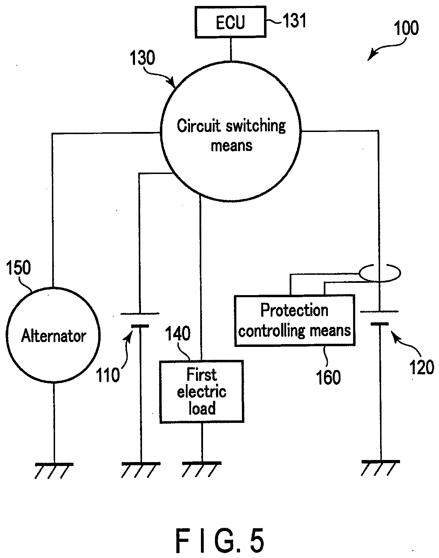

FIG. 5 is a schematic circuit diagram of a battery system according to the second embodiment.

A battery system 100 shown in FIG. 5 includes a first battery 110 and a second battery 120.

The first battery 110 is a battery module configured by a plurality of lead-acid storage batteries. The second battery 120 is a battery module configured by a plurality of the nonaqueous electrolyte batteries 1 each described with reference to FIGS. 1 to 3. The nominal voltage of the second battery 120 is the same as that of the first battery 110.

In the battery system 100 shown in FIG. 5, the first battery 110 and the second battery 120 are connected in parallel via a circuit switching means 130.

The circuit switching means 130 includes a semiconductor switch (not shown). The semiconductor switch includes a metal-oxide-semiconductor junction field effect transistor (MOF-FET) and can switch between conduction and shutdown of electrons via the transistor. Switching between conduction and shutdown of electrons via the semiconductor switch is controlled by an electric control means (ECU) 131.

The voltage between terminals of the first battery 110 is monitored by a sensor (not shown) and information thereof is sent to the electronic control means 131.

The battery system 100 shown in FIG. 5 further includes an electric load 140 and an alternator 150. The electric load 140 and the alternator 150 are connected in parallel to the first battery 110 and the second battery 120 via the circuit switching means 130.

The alternator 150 is an AC generator that transduces mechanical energy into electric energy. The alternator 150 can send an AC current to a rectifier (not shown). The rectifier has a function to tranceduce the received AC current into a DC current and pass the DC current to the battery system 100. The voltage sent from the alternator 150 is monitored by the sensor (not shown) and information thereof is sent to the electronic control means 131.

The battery system shown in FIG. 5 further includes a protection controlling means 160 to protect the first battery 110 and the second battery 120. The protection controlling means 160 can include, for example, a means (not shown) to monitor the voltage between terminals of the second battery 120. If, for example, the voltage between terminals of the second battery 120 deviates from a operatable voltage range of the first battery 110, the protection controlling means 160 can prevent conduction between the first battery 110 and the second battery 120 by sending a signal to the electronic control means 131 connected to the circuit switching means 130 to make the semiconductor switch to a "shutdown" status.

The battery system 100 shown in FIG. 5 is, for example, a battery system for vehicles.

In the battery system 100 as a battery system for vehicles, the electric load 140 includes, for example, air-conditioning equipment and lighting equipment.

In the battery system 100 as a battery system for vehicles, the alternator 150 is mechanically connected to the engine of the vehicle. The alternator 150 is also connected to a braking system and can transduce energy generated when the vehicle is braked into regenerated energy.

Next, an example of transmission of electric power in the battery system 100 as a battery system for vehicles will be described.

### (1) When Engine Operates

While the engine of the vehicle operates, the alternator 150 generates electric power and electricity thus generated is transduced into a DC current by a rectifier (not shown) and sent to the electric load 140.

If the transmission voltage from the alternator 150 is within a range permitted by the first battery 110 while the engine operates, the electronic control means 131 makes the status of the semiconductor switch to a "conduction" status between the alternator 150 and the first battery 110 to send electricity generated by the alternator 150 to the first battery 110.

If the transmission voltage from the alternator 150 deviates from a range permitted by the first battery 110 while the engine operates, the electronic control means 131 makes the status of the semiconductor switch to the "shutdown" status between the alternator 150 and the first battery 110 to shut down power transmission from the alternator 150 to the first battery 110.

Similarly, if the transmission voltage from the alternator 150 is within a range permitted by the second battery 120 while the engine operates, the electronic control means 131 makes the status of the semiconductor switch to the "conduction" status between the alternator 150 and the second battery 120 to send electricity generated by the alternator 150 to the second battery 120.

If the transmission voltage from the alternator 150 deviates from a range permitted by the second battery 120 while the engine operates, the electronic control means 131 makes the status of the semiconductor switch to the "shutdown" status between the alternator 150 and the second battery 120 to shut down power transmission from the alternator 150 to the second battery 120.

If the transmission voltage from the alternator 150 is within a range permitted by both of the first battery 110 and the second battery 120 while the engine operates, electricity from the alternator 150 flows to both of the first battery 110 and the second battery 120. In this case, electricity preferentially flows to the battery having a lower resistance of the first battery 110 and the second battery 120, more specifically, to the second battery 120. Accordingly, the electric load on the first battery 110 can be reduced.

### (2) When Vehicle is Braked

When a vehicle is braked, the alternator 150 instantaneously passes a larger current to the battery system 100 than when the engine operates. In this case, the electronic control means 131 makes the status of the semiconductor switch to the "conduction" status between the alternator 150 and the second battery 120, but to the "shutdown" status between the alternator 150 and the first battery 110.

In the battery system 100, the second battery 120 is a battery module of nonaqueous electrolyte batteries capable of a rapid charge and/or discharge. Thus, the second battery 120 can receive a large current generated by the alternator 150 when the vehicle is braked.

The lead-acid storage battery contained in the first battery 110 tends to be degraded when electric energy at a large current is input. In the battery system 100, however, a large current input when the vehicle is braked can be received by, as described above, the second battery 120 containing the nonaqueous electrolyte battery 1 capable of exhibiting excellent input characteristics. Therefore, the battery system 100 can, while being able to efficiently regenerate energy obtained during braking, prevent degradation of the first battery 110 containing a lead-acid storage battery and by extension, degradation of the whole battery system 100.

### (3) When Engine Stops

When the engine stops, the alternator 150 does not generate electric power and thus, no electric power is transmitted from the alternator 150. Instead, the first battery 110 or the second battery 120 transmits electric power to the electric load 140. In this case, the protection controlling means 160 controls the circuit switching means 130 by sending a signal to the electronic control means 131 so that the voltage of each of the first battery 110 and the second battery 120 can be maintained in an operatable voltage range.

A battery system according to the second embodiment includes a second battery including a nonaqueous electrolyte battery according to the first embodiment and thus can exhibit excellent output characteristics and excellent charge-and-discharge cycle characteristics.

### [Examples]

Some examples will be described below.

### (Example 1)

In Example 1, the nonaqueous electrolyte battery 1 shown in FIGS. 1 to 3 is produced according to the procedure shown below.

### [Production of Positive Electrode 6]

As the positive electrode active material, powder of aluminum-substituted lithium-manganese composite oxide LiMn_{1.73}Al_{0.27}O₄ was used. As a result of measurement by the laser diffraction scattering method, the average particle size of the positive electrode active material powder was 9 µm. The active material particles were ground by a dry mill to adjust the average particle size to 6 µm. The active material powder whose particle size had been adjusted, acetylene black, graphite, and polyvinylidene fluoride were mixed in a weight ratio of 100 : 3 : 3 : 5 by the procedure below. First, a Henschel mixer was used to dry-blend the active material powder, acetylene black, and graphite. After mixed powder was input and dry-blended for one hour at 500 rpm, polyvinylidene fluoride and N-methyl-2-pyrolidone were input into the obtained dry mixture and the mixture was wet-blended by a planetary mixer. The mixed solution was input into the planetary mixer and mixed for two hours at 40 rpm of the rotating speed of the blade and at 3000 rpm of the rotating speed of the shear blade. In this manner, positive electrode slurry containing each material in the above ratio was produced.

Each side of the aluminum foil 61 having a thickness of 20 µm was coated with the positive electrode slurry obtained after stirring by a coating machine such that the amount of coating per unit area was 50 g/m². In this case, the portion 63 that was not coated with the slurry was left in the aluminum foil 61. The obtained coted film of coating was dried and then rolled by a roll pressing machine such that the electrode density (the current collector was not included) was 3.0 g/cm³. Lastly, the portion 63 not coated with the slurry was cut to form the narrow portion 63 as a positive electrode lead shown in FIG. 3. In this manner, a plurality of the positive electrodes 6 were produced.

### [Production of Negative Electrode]

As the negative electrode active material, powder of lithium titanate Li₄Ti₅O₁₂ was used. As a result of measurement by the laser diffraction scattering method, the average particle size of the negative electrode active material powder was 1 µm. The active material was ground by a dry mill to adjust the average particle size to 0.7 µm. The active material powder whose particle size had been adjusted, acetylene black, graphite, and polyvinylidene fluoride were mixed in a weight ratio of 100 : 3 : 3 : 5 by the procedure below. First, a Henschel mixer was used to dry-blend the active material powder, acetylene black, and graphite. After mixed powder is input and dry-blended for one hour at 500 rpm, polyvinylidene fluoride and N-methyl-2-pyrolidone were input into the obtained dry mixture and the mixture was wet-blended by a planetary mixer. The mixed solution was input into the planetary mixer and mixed for two hours at 50 rpm of the rotating speed of the blade and at 3000 rpm of the rotating speed of the shear blade. In this manner, negative electrode slurry containing each material in the above ratio is produced.

Aluminum foil 71 having a thickness of 20 µm was coated by a coating machine with the obtained negative electrode slurry such that the amount of coating per unit area was 25 g/m². In this case, a portion that was not coated with the slurry was left in the aluminum foil 71. The obtained film of coating was dried and then rolled by a roll pressing machine such that the electrode density (the current collector was not included) was 2.4 g/cm³. Like the positive electrode 6, the portion not coated with the slurry was cut to form a narrow portion as a negative electrode lead just like in the positive electrode 6 shown in FIG. 3. In this manner, a plurality of the negative electrodes 7 were produced.

### [Production of Electrode Group 2]

The microporous film separator 8 having a thickness of 30 µm in a band shape was provided. The separator 8 was zigzag-folded and, as described with reference to FIG. 2, the positive electrodes 6, the negative electrodes 7, and the separator 8 were laminated. In this case, the plurality of positive electrode leads 63 and a plurality of negative electrode leads extended in mutually opposite directions from the laminate. Lastly, coiling stop tape (not shown) was stuck to the obtained laminate to obtain the electrode group 2. The electrode area and lamination number were adjusted such that the discharge capacity of the electrode group 2 became 0.5 Ah.

### [Connection of Positive Electrode Current Collecting Tab 4 and Negative Electrode Current Collecting Tab 5 to Electrode Group 2]

The positive electrode current collecting tab 4 and the negative electrode current collecting tab 5 were produced using aluminum. Subsequently, the positive electrode leads 63 of the plurality of positive electrodes 6 were put together and connected to the positive electrode current collecting tab 4. Similarly, the negative electrode leads of the plurality of negative electrodes 7 were put together and connected to the negative electrode current collecting tab 5. In this manner, the positive electrode current collecting tab 4 and the negative electrode current collecting tab 5 were provided such that current collection from the positive electrode 6 and current collection from the negative electrode 7 extended in mutually opposite directions from the electrode group 2, in order to be able to collect a current easily.

### [Production of Container 3]

An aluminum-containing laminate film was used for the container 3. First, an aluminum-containing laminate film 3 was molded in which the electrode group 2 can be housed. The electrode group 2 was housed as described above with reference to FIGS. 1 and 2 in the aluminum-containing laminate film 3 thus molded. In this case, as shown in FIG. 2, the positive electrode current collecting tab 4 was sandwiched between the resin films 32 in the edge portion 3b of the container 3. Similarly, though not illustrated in FIG. 2, the negative electrode current collecting tab 5 was sandwiched between the resin films 32 in the edge portion 3c of the container 3. The insulating film 9 was provided between the positive electrode current collecting tab 4 and the resin films 32 and between the negative electrode current collecting tab 5 and the resin films 32.

Subsequently, the opposite resin films 32 in the edge portions 3a, 3b, 3c were fixed by fusion-bonding while leaving a portion thereof. At the same time, in the edge portion 3b, the resin film 32 and the insulating film 9 opposite thereto were fixed by fusion-bonding and the positive electrode current collecting tab 4 and the insulating film 9 opposite thereto were fixed by fusion-bonding. Similarly, in the edge portion 3c, the resin film 32 and the insulating film 9 opposite thereto were fixed by fusion-bonding and the negative electrode current collecting tab 5 and the insulating film 9 opposite thereto were fixed by fusion-bonding. In this manner, a cell before-injection was produced.

### [Injection of Nonaqueous Electrolyte]

For the nonaqueous electrolyte, a solvent obtained by mixing ethylene carbonate and dimethyl carbonate in the ratio of 1 : 1 was used as the nonaqueous electrolyte and 1 mol/l of lithium hexafluorophosphate was used as the electrolyte. The nonaqueous electrolyte was injected into the cell before-injection described above. The nonaqueous electrolyte was injected via a portion of the edge portion of the container 3 left without being fusion-bonded.

### [Production of Nonaqueous Electrolyte Battery 1]

The portion of the edge portion of the container 3 left without being fusion-bonded was fusion-bonded. Thus, a battery unit was obtained. The obtained battery unit was charged at 0.5 A in a constant temperature bath maintained at 25°C until the voltage became 2.8 V and then the state at 2.8 V was maintained for three hours. Then, the battery unit was left alone for 30 min in an open circuit state. Next, the battery unit was discharged at 0.5 A until the voltage became 2 V. The set of the above charge and the above discharge was defined as one cycle and the charge-and-discharge cycles were performed three times. After the three charge-and-discharge cycles, the battery unit was charged at 0.5 A for 30 min to produce the nonaqueous electrolyte battery 1.

Next, charge and discharge cycles of the nonaqueous electrolyte battery 1 was further subjected to the above charge-and-discharge cycle three times. The capacity obtained in the third charge was defined as the reference capacity. The reference capacity of the nonaqueous electrolyte battery 1 in Example 1 was 0.5 Ah.

### [Evaluation]

For the nonaqueous electrolyte battery 1 in Example 1 produced as described above, the rate characteristic, charge-and-discharge cycle characteristic, battery voltage, and ratio of the capacity of the positive electrode 6 per pore surface area of the positive electrode layer 62 to that of the negative electrode 7 per pore surface area of the negative electrode layer 72 are evaluated by the procedure below.

### (Rate Characteristic)

The nonaqueous electrolyte battery 1 in Example 1 was charged at 0.5 A in a constant temperature bath maintained at 25°C until the voltage became 2.8 V and then the state at 2.8 V was maintained for three hours. Then, the nonaqueous electrolyte battery 1 was left alone for 30 minutes in an open circuit state. Next, the nonaqueous electrolyte battery 1 was discharged at 5.0 A until the voltage became 2.0 V. The quotient obtained by dividing the discharge capacity in the discharge by the reference capacity was defined as the rate characteristic. The rate characteristic of the nonaqueous electrolyte battery 1 in Example 1 was 78%.

### (Charge-and-Discharge Cycle Characteristic)

The nonaqueous electrolyte battery 1 in Example 1 was subjected to the following charge-and-discharge cycles repeated 3000 times in an environment of 45°C. First, the nonaqueous electrolyte battery 1 was charged at 12.5 A until the voltage became 2.8 V and then the charge was finished when the current value became 0.25 A during maintained at 2.8 V. After the charge, the nonaqueous electrolyte battery 1 was left alone for 10 minutes in an open circuit state. Next, the nonaqueous electrolyte battery 1 was discharged at 2.5 A until the voltage became 2.0V. A set of the above charge, the above maintenance, and the above discharge was defined as one charge-and-discharge cycle.

After 3000 cycles, the nonaqueous electrolyte battery 1 was subjected to the following additional three charge-and-discharge cycles. First, in a constant temperature bath maintained at 25°C, the nonaqueous electrolyte battery 1 was charged at 0.5 A until the voltage became 2.8 V and then the state at 2.8 V was maintained for three hours. Then, the nonaqueous electrolyte battery 1 was left alone for 30 minute in an open circuit state. Next, the nonaqueous electrolyte battery 1 was discharged at 0.5 A until the voltage became 2 V. A set of the above charge and the above discharge was defined as one cycle and the charge-and-discharge cycles were performed three times. The ratio of the capacity obtained during discharge at the additional third cycle to the reference capacity was defined as the charge-and-discharge cycle characteristic. The charge-and-discharge cycle characteristic of the nonaqueous electrolyte battery 1 in Example 1 is 96%.

### (Battery Voltage)

For the nonaqueous electrolyte battery whose charge-and-discharge cycle characteristic had been evaluated, 50% of the capacity obtained during discharge at the additional third cycle in the cycle test was charged at 0.5 A. After the charge, the nonaqueous electrolyte battery 1 was left alone for three hours. After being left alone, the battery voltage of the nonaqueous electrolyte battery 1 was measured. The battery voltage of the nonaqueous electrolyte battery 1 in Example 1 was 2.49 V.

### (Pore Surface Area of Positive Electrode Layer 62 and Capacity per Pore Surface Area of Positive Electrode 6)

The capacity of the positive electrode of the nonaqueous electrolyte battery 1 in Example 1 after the battery voltage measurement was measured by the procedure below. Details of the method of disassembling a cell conformed to the method of measuring the BET pore specific surface area described above. The details are as follows.

First, the nonaqueous electrolyte battery 1 was placed in a glove box in an argon atmosphere. Next, the nonaqueous electrolyte battery 1 was disassembled. The electrode group 2 was taken out from the disassembled nonaqueous electrolyte battery 1. The positive electrode 6 and the negative electrode 7 were taken out from the taken-out nonaqueous electrolyte battery 1. The weight of each of the positive electrode 6 and the negative electrode 7 that had been taken out was measured.

Next, the taken-out positive electrode 6 was cut into a piece having a size of 2 cm x 2 cm as a positive electrode sample. The weight of the positive electrode sample was measured again. Next, the positive electrode sample was arranged in a glass cell as a working electrode and a lithium metal was arranged as a counter electrode. A microporous film separator having a thickness of 30 µm in a band shape was provided between these electrodes. As the nonaqueous electrolyte, a nonaqueous electrolytic solution was prepared by using a nonaqueous solvent obtained by mixing ethylene carbonate and dimethyl carbonate in the ratio of 1 : 1 and 1 mol/l of lithium hexafluorophosphate used as the electrolyte. The nonaqueous electrolytic solution was injected into the glass cell to produce a beaker cell.

The beaker cell was charged at 0.3 mA until the potential of the positive electrode sample became 4.3 V and then the state at 4.3 V was maintained for three hours. Next, the beaker cell was left alone for 30 minute in an open circuit. Next, the beaker cell was discharged at 0.3 mA until the potential of the positive electrode sample became 3.5 V. The discharge capacity at this point was recorded as the capacity of the positive electrode sample. After the capacity measurement, the beaker cell was disassembled again and the positive electrode sample was taken out. The pore specific surface area of the positive electrode sample was measured by using the method described before. The measurement showed that the pore specific surface area of the positive electrode sample, that is, the positive electrode layer 62 in Example 1 was 4 m²/g.

The capacity of the positive electrode 6 per gram of the weight of the positive electrode layer was calculated by dividing the capacity of the positive electrode sample previously obtained, by the weight of the sample of the positive electrode layer measured during measurement of the pore specific surface area.

Next, the capacity of the positive electrode 6 per pore surface area of the positive electrode layer 62 was calculated by dividing the capacity of the positive electrode 6 per gram of the weight of the positive electrode layer 62 by the pore specific surface area of the positive electrode layer 62, that is, 4 m²/g.

### (Pore Specific Surface Area of Negative Electrode layer 72 and Capacity per pore Surface Area of Negative Electrode 7)

The negative electrode 7 taken out from the nonaqueous electrolyte battery 1 disassembled by the above procedure was cut into a piece having a size of 2 cm x 2 cm as a negative electrode sample. The weight of the negative electrode sample was measured again. Next, the negative electrode sample was used to produce a beaker cell for the negative electrode by the same procedure as the procedure for producing a beaker cell for the positive electrode.

The beaker cell was charged at 0.3 mA until the potential of the negative electrode sample which was the working electrode became 1.0 V and then the state at 1.0 V was maintained for three hours. Next, the beaker cell was left alone for 30 minute in an open circuit. Next, the beaker cell was discharged at 0.3 mA until the potential of the negative electrode sample became 2.5 V. The discharge capacity at this point is recorded as the capacity of the negative electrode sample.

After the capacity measurement, the beaker cell was disassembled again and the negative electrode sample was taken out. The pore specific surface area of the negative electrode sample was measured by using the method described before. The measurement showed that the pore specific surface area of the negative electrode sample, that is, the negative electrode layer 72 in Example 1 is 11 m²/g.

The capacity of the negative electrode 7 per gram of the weight of the negative electrode layer 72 was calculated by dividing the capacity of the negative electrode sample previously obtained, by the weight of the sample of the negative electrode layer measured during measurement of the pore specific surface area.

Next, the capacity of the negative electrode 7 per pore surface area of the negative electrode 7 was calculated by dividing the capacity of the negative electrode 7 per gram of the weight of the negative electrode layer 72, by the pore specific surface area of the negative electrode layer 72, that is, 11 m²/g.

### <Ratio of Capacity of Positive Electrode 6 per Pore Surface Area of Positive Electrode Layer 62 to That of Negative Electrode 7 per Pore Surface Area of Negative Electrode Layer 72>

The capacity of the positive electrode 6 per pore surface area of the positive electrode layer 62 was divided by the capacity of the negative electrode 7 per pore surface area of the negative electrode layer 72. As a result, the ratio of the capacity of the positive electrode 6 per pore surface area of the positive electrode layer 62 to that of the negative electrode 7 per pore surface area of the negative electrode layer 72 of the nonaqueous electrolyte battery 1 in Example 1 was 1.65.

### (Example 2)

In Example 2, the nonaqueous electrolyte battery 1 in Example 2 is produced in the same manner as in Example 1 except that powder of aluminum-substituted lithium-manganese composite oxide LiMn_{1.67}Al_{0.33}O₄ was used as the positive electrode active material.

As a result of measurement by the laser diffraction scattering method, the average particle size of the positive electrode active material powder used was 8.6 µm. Before the preparation of positive electrode slurry, the active material particles were ground by a dry mill to adjust the average particle size to 6 µm.

### (Example 3)

In Example 3, the nonaqueous electrolyte battery 1 in Example 3 was produced in the same manner as in Example 1 except that powder of aluminum-substituted lithium-manganese composite oxide LiMn_{1.34}Al_{0.66}O₄ was used as the positive electrode active material.

As a result of measurement by the laser diffraction scattering method, the average particle size of the positive electrode active material powder used was 9.1 µm. Before the preparation of positive electrode slurry, the active material particles were ground by a dry mill to adjust the average particle size to 6 µm.

### (Example 4)

In Example 4, the nonaqueous electrolyte battery 1 in Example 4 was produced in the same manner as in Example 1 except that the positive electrode active material powder shown below was used and the pore specific surface area of the positive electrode layer 62 was set to 2 m²/g without using dry grinding and also the negative electrode active material powder shown below was used and the pore specific surface area of the negative electrode layer 72 was set to 5.5 m²/g without using dry grinding.

The average particle size of the positive electrode active material powder used was 9 µm. The average particle size of the negative electrode active material power was 1.45 µm.

### (Example 5)

In Example 5, the nonaqueous electrolyte battery 1 in Example 5 was produced in the same manner as in Example 5 except that the pore specific surface area of the positive electrode layer 62 was set to 5 m²/g by adjusting dry grinding conditions for the positive electrode active material powder such that the average particle size of the positive electrode active material powder became 4 µm and also the pore specific surface area of the negative electrode layer was set to 13.7 m²/g by adjusting dry grinding conditions of the negative electrode active material powder such that the average particle size of the negative electrode active material powder became 0.6 µm.

### (Example 6)

In Example 6, the nonaqueous electrolyte battery 1 in Example 6 was produced in the same manner as in Example 1 except that powder of aluminum-and-titanium-substituted lithium-manganese composite oxide LiMn_{1.67}Al_{0.18}Ti_{0.15}O₄ was used as the positive electrode active material.

As a result of measurement by the laser diffraction scattering method, the average particle size of the positive electrode active material powder used was 9.1 µm. Before the preparation of positive electrode slurry, the active material particles were ground by a dry mill to adjust the average particle size to 6 µm.

### (Example 7)

In Example 7, the nonaqueous electrolyte battery 1 in Example 7 was produced in the same manner as in Example 1 except that powder of aluminum and magnesium substituted lithium-manganese composite oxide LiMn_{1.67}Al_{0.18}Mg_{0.15}O₄ was used as the positive electrode active material.

As a result of measurement by the laser diffraction scattering method, the average particle size of the positive electrode active material powder used was 8.8 µm. Before the preparation of positive electrode slurry, the active material particles were ground by a dry mill to adjust the average particle size to 6 µm.

### (Example 8)

In Example 8, the nonaqueous electrolyte battery 1 in Example 8 was produced in the same manner as in Example 1 except that the pore specific surface area of the negative electrode layer 72 was set to 7 m²/g by adjusting dry grinding conditions for the negative electrode active material powder such that the average particle size of the negative electrode active material powder became 0.9 µm.

### (Example 9)

In Example 9, the nonaqueous electrolyte battery 1 in Example 9 was produced in the same manner as in Example 1 except that the pore specific surface area of the negative electrode layer 72 was set to 14 m²/g by adjusting dry grinding conditions of the negative electrode active material powder such that the average particle size of the negative electrode active material powder became 0.55 µm.

### (Example 10)

In Example 10, the nonaqueous electrolyte battery 1 in Example 10 was produced in the same manner as in Example 1 except that the pore specific surface area of the positive electrode layer 62 was set to 3 m²/g by adjusting dry grinding conditions of the positive electrode active material such that the average particle size of the positive electrode active material powder becomes 7 µm.

### (Comparative Example 1)

In Comparative Example 1, the nonaqueous electrolyte battery 1 in Comparative Example 1 was produced in the same manner as in Example 1 except that powder of aluminum-substituted lithium-manganese composite oxide LiMn_{1.84}Al_{0.16}O₄ was used as the positive electrode active material.

As a result of measurement by the laser diffraction scattering method, the average particle size of the positive electrode active material powder used was 9.2 µm. Before the preparation of positive electrode slurry, the active material particles were ground by a dry mill to adjust the average particle size to 6 µm.

### (Comparative Example 2)

In Comparative Example 2, the nonaqueous electrolyte battery 1 in Comparative Example 2 was produced in the same manner as in Example 1 except that powder of aluminum-substituted lithium-manganese composite oxide LiMn_{1.25}Al_{0.75}O₄ was used as the positive electrode active material.

As a result of measurement by the laser diffraction scattering method, the average particle size of the positive electrode active material powder used was 9.3 µm. Before the preparation of positive electrode slurry, the active material particles were ground by a dry mill to adjust the average particle size to 6 µm.

### (Comparative Example 3)

In Comparative Example 3, the nonaqueous electrolyte battery 1 in Comparative Example 3 was produced in the same manner as in Example 1 except that the positive electrode active material powder shown below was used and the pore specific surface area of the positive electrode layer 62 is set to 1 m²/g without using dry grinding and also the negative electrode active material powder shown below was used and the pore specific surface area of the negative electrode layer 72 was set to 2.75 m²/g without using dry grinding.

As a result of measurement by the laser diffraction scattering method, the average particle size of the positive electrode active material powder used was 11.5 µm. Also, as a result of measurement by the laser diffraction scattering method, the average particle size of the negative electrode active material powder used was 3.0 µm.

### (Comparative Example 4)

In Comparative Example 4, the nonaqueous electrolyte battery 1 in Comparative Example 4 was produced in the same manner as in Example 1 except that the pore specific surface area of the positive electrode layer 62 was set to 6 m²/g by adjusting dry grinding conditions for the positive electrode active material powder and also the pore specific surface area of the negative electrode layer 72 was set to 16.5 m²/g by adjusting dry grinding conditions for the negative electrode active material powder.

As a result of measurement by the laser diffraction scattering method, the average particle size of the positive electrode active material powder was 9 µm. Before the preparation of positive electrode slurry, the active material was ground by a dry mill to adjust the average particle size to 4 µm. On the other hand, as a result of measurement by the laser diffraction scattering method, the average particle size of the negative electrode active material powder was 1 µm. Also before the preparation of negative electrode slurry, the active material was ground by a dry mill to adjust the average particle size to 0.5 µm.

### (Comparative Example 5)

In Comparative Example 5, the nonaqueous electrolyte battery 1 in Comparative Example 5 was produced in the same manner as in Example 1 except that the negative electrode active material powder shown below was used and the pore specific surface area of the negative electrode layer 72 was set to 5 m²/g without using dry grinding.

As a result of measurement by the laser diffraction scattering method, the average particle size of the negative electrode active material powder was 1.4 µm.

### (Comparative Example 6)

In Comparative Example 6, the nonaqueous electrolyte battery 1 in Comparative Example 6 was produced in the same manner as in Example 1 except that the pore specific surface area of the positive electrode layer 62 was set to 3 m²/g by adjusting dry grinding conditions for the positive electrode active material powder and also the pore specific surface area of the negative electrode layer 72 was set to 14 m²/g by adjusting dry grinding conditions for the negative electrode active material powder.

As a result of measurement by the laser diffraction scattering method, the average particle size of the positive electrode active material powder was 9 µm. Before the preparation of positive electrode slurry, the active material particles were ground by a dry mill to adjust the average particle size to 5 µm.

Also, as a result of measurement by the laser diffraction scattering method, the average particle size of the negative electrode active material powder was 1.0 µm. Before the preparation of negative electrode slurry, the active material particles were ground by a dry mill to adjust the average particle size to 0.6 µm.

### [Evaluation]

The nonaqueous electrolyte batteries 1 in Examples 2 to 10 and the nonaqueous electrolyte batteries 1 in Comparative Examples 1 to 6 were evaluated in the same manner as the nonaqueous electrolyte battery 1 in Example 1 was evaluated. The results thereof are shown in Tables 1 and 2 shown below.

### (Comparative Example 7)

In Comparative Example 7, the nonaqueous electrolyte battery 1 in Comparative Example 7 was produced in the same manner as in Example 1 except that graphite was used as the negative electrode active material, copper foil having a thickness of 10 µm was used as the negative electrode current collector, and the copper foil as the current collector 71 was coated with negative electrode slurry such that the amount of coating per unit area was 13 g/m².

The nonaqueous electrolyte battery 1 in Comparative Example 7 was evaluated in the same manner as the nonaqueous electrolyte battery in Example 1 was evaluated except the following points. The results thereof are shown in Table 1.

The nonaqueous electrolyte battery 1 in Comparative Example 7 was charged and discharged under the same conditions as in Example 1 except that the upper limit voltage was set to 4.1 V and the lower limit voltage was set to 3.0 V.

When the capacity of the negative electrode sample is measured, the capacity was confirmed by setting the charge end potential of the negative electrode sample to 0.1 V and the discharge end potential to 1.5 V.

### [Results]

The results thereof are shown in Tables 1 and 2 shown below.

**(Table 1)**

| | Positive Electrode Active Material LiMn₂₋ₓMₓO₄ | | Pore Specific Surface Area of Positive Electrode Layer | Capacity Ratio per Pore Surface Area of Positive electrode to Negative Electrode | Negative Electrode Active Material | Rate Characteristic (%) | Cycle Characteristic (%) | Battery Voltage (V) |
|---|---|---|---|---|---|---|---|---|
| | Substitution Element M | Substitution Amount x | | | | | | |
| Example 1 | Al | 0.27 | 4g/m² | 1.65 | LTO | 78 | 96 | 2.49 |
| Example 2 | Al | 0.33 | 4g/m² | 1.45 | LTO | 77 | 97 | 2.51 |
| Example 3 | Al | 0.66 | 4g/m² | 1.34 | LTO | 71 | 95 | 2.52 |
| Example 4 | Al | 0.27 | 2g/m² | 1.65 | LTO | 73 | 98 | 2.5 |
| Example 5 | Al | 0.27 | 5g/m² | 1.65 | LTO | 79 | 94 | 2.49 |
| Example 6 | Al/Ti | 0.18/0.15 | 4g/m² | 1.65 | LTO | 72 | 93 | 2.5 |
| Example 7 | Al/Mg | 0.18/0.15 | 4g/m² | 1.65 | LTO | 73 | 94 | 2.48 |
| Example 8 | Al | 0.27 | 4g/m² | 1.05 | LTO | 74 | 96 | 2.5 |
| Example 9 | Al | 0.27 | 4g/m² | 2.1 | LTO | 81 | 93 | 2.51 |
| Example 10 | Al | 0.27 | 3g/m² | 2.2 | LTO | 77 | 96 | 2.5 |
| Comparative Example 1 | Al | 0.16 | 4g/m² | 1.83 | LTO | 69 | 85 | 2.46 |
| Comparative Example 2 | Al | 0.75 | 4g/m² | 1.33 | LTO | 53 | 63 | 2.42 |
| Comparative Example 3 | Al | 0.27 | 1g/m² | 1.65 | LTO | 66 | 88 | 2.47 |
| Comparative Example 4 | Al | 0.27 | 6g/m² | 1.65 | LTO | 68 | 83 | 2.45 |
| Comparative Example 5 | Al | 0.27 | 4g/m² | 0.9 | LTO | 70 | 89 | 2.46 |
| Comparative Example 6 | Al | 0.27 | 4g/m² | 2.8 | LTO | 69 | 84 | 2.49 |
| Comparative Example 7 | Al | 0.27 | 3g/m² | 0.92 | Graphite | 65 | 72 | 3.65 |

**(Table 2)**

| | Capacity of Positive Electrode per Surface Area of Positive Electrode (mAh/m²) | Capacity of Negative Electrode per Surface Area of Negative Electrode (mAh/m²) |
|---|---|---|
| Example 1 | 23.3 | 14.1 |
| Example 2 | 20.5 | 14.1 |
| Example 3 | 18.9 | 14.1 |
| Example 4 | 46.5 | 28.2 |
| Example 5 | 18.6 | 11.3 |
| Example 6 | 23.3 | 14.1 |
| Example 7 | 23.3 | 14.1 |
| Example 8 | 23.3 | 22.1 |
| Example 9 | 23.3 | 11.1 |
| Example 10 | 31.0 | 14.1 |
| Comparative Example 1 | 25.8 | 14.1 |
| Comparative Example 2 | 18.8 | 14.1 |
| Comparative Example 3 | 93.0 | 56.4 |
| Comparative Example 4 | 15.5 | 9.4 |
| Comparative Example 5 | 23.3 | 25.8 |
| Comparative Example 6 | 31.0 | 11.1 |
| Comparative Example 7 | 23.3 | 25.4 |

From the results shown in Table 1, it is evident that the nonaqueous electrolyte batteries 1 in Examples 1 to 10 were superior to the nonaqueous electrolyte batteries 1 in Comparative Examples 1 to 7 in rate characteristics and cycle characteristics and can exhibit higher battery voltages. This is conceivable that the input and output can be balanced between the positive electrode and the negative electrode and also the concentration of reaction on the positive electrode side or the negative electrode side can be prevented in the nonaqueous electrolyte batteries 1 in Examples 1 to 10 by controlling the pore specific surface area of the positive electrode and the capacity ratio per pore surface area of the positive electrode and the negative electrode together with the amount of substitution elements in lithium-manganese composite oxide in the positive electrode.

From the results of Examples 1 to 3, it is clear that even if the amount of substitution elements x changes, excellent rate characteristics and cycle characteristics can be exhibited if the substitution amount x is in the range of 0.22 or more and 0.7 or less.

From the results of Examples 1, 4, 5, and 10, it is clear that even if the pore specific surface area of the positive electrode layer is set to 5 m²/g or less, excellent rate characteristics and cycle characteristics can be exhibited if the pore specific surface area is 2 m²/g or more. This means that the crystal structure of the positive electrode active material is stabilized by a substitution element M.

From the results of Examples 1, 6, and 7, it is clear that even if an element other than Al is contained as the substitution element M, rate characteristics and cycle characteristics can be improved.

From the results of 1 and 8 to 10, it is clear that excellent rate characteristics and cycle characteristics can be exhibited if the ratio of the capacity of the positive electrode per pore surface area of the positive electrode layer to the capacity of the negative electrode per pore surface area of the negative electrode layer is within the range of 1 or more and less than 2.4. This can be considered to be a result of, for example, being able to balance the input and output between the positive electrode and the negative electrode and also being able to prevent the concentration of reaction on the positive electrode side or the negative electrode side.

In Comparative Example 1, on the other hand, it is considered that cycle characteristics were degraded because the substitution amount x of element was small and stabilization of the crystal structure was not sufficient. In Comparative Example 1, it is also considered that an improvement effect of output characteristics due to enlargement of the crystal structure by substitution was not obtained sufficiently.

In Comparative Example 2, it is considered that battery characteristics were degraded because the substitution amount x of element was too large and thus, the solubility limit was almost reached and a heterogeneous phase arose during crystallization of the positive electrode active material.

In Comparative Examples 3 and 4, it is considered that rate characteristics and cycle characteristics were degraded because the pore specific surface area of the positive electrode layer was too small or too large. More specifically, in Comparative Example 3, it is considered that the reaction area of the positive electrode was small and, as a result, the load on the positive electrode was increased when discharged at a high rate. In Comparative Example 4, on the other hand, it is considered that a load at a reaction interface in the negative electrode was increased due to the concentration of the nonaqueous electrolyte solution on the positive electrode layer and the elution of transition metal in the positive electrode active material was increased because the pore specific surface area of the positive electrode increases.

It is considered that in Comparative Examples 5 and 6, the resistance was unbalanced during charging/discharging because the ratio of the capacity of the positive electrode per pore surface area of the positive electrode layer to the capacity of the negative electrode per pore surface area of the negative electrode layer was not within the range of 1 or more and less than 2.4. As a result, it is considered that a region, in which a reaction was less likely to proceed, generated during the rate test, leading to degraded characteristics. It is also considered that, in a state in which the resistance was unbalanced, degradation behavior during the cycle test was also unbalanced, leading to accelerated degradation.

In Comparative Example 7, graphite as a carbon material was used as the negative electrode active material and thus, the battery voltage rose sharply. However, the voltage moves away from 13 V near the operating voltage of the lead-acid storage battery in both cases of three batteries and four batteries connected in series. Therefore, the nonaqueous electrolyte battery 1 in Comparative Example 7 has a poor voltage-compatibility with the lead-acid storage battery. Also, it is considered that the nonaqueous electrolyte battery 1 in Comparative Example 7 was inferior in rate characteristics and cycle characteristics because the capacity of the negative electrode per surface area of the negative electrode layer and the capacity of the positive electrode capacity per surface area of the positive electrode layer were not well balanced.

On the other hand, the nonaqueous electrolyte batteries in Examples 1 to 10 can exhibit excellent rate characteristics and cycle characteristics while exhibiting a high battery voltage. In the nonaqueous electrolyte batteries 1 in Examples 1 to 10, this can be considered to be a result of obtaining the capacity in the proper quantity for the battery design because the positive electrode and the negative electrode were enabled to react in a well-balanced manner. Each of the nonaqueous electrolyte batteries in Examples 1 to 10 can have such an increased voltage of the battery and can make the battery voltage for example when five cells are connected in series close to 13 V as a voltage assumed for a lead-acid storage battery. In view of use in combination with the lead-acid storage battery, the more similar voltage ranges to each other, the more expanded the field of use of the nonaqueous electrolyte battery can be and thus, the higher power can be output. Therefore, a battery system including, for example, the first battery including a lead-acid storage battery and exhibiting 13 V and the second battery as a battery module in which the five nonaqueous electrolyte batteries 1 in any of Examples 1 to 10 are connected to each other in series can exhibit excellent output characteristics and excellent charge-and-discharge cycle characteristics.

According to at least one of the embodiments and examples described above, a nonaqueous electrolyte battery is provided. In the nonaqueous electrolyte battery, the positive electrode layer of a positive electrode contains lithium-manganese composite oxide represented by the general formula of LiMn₂₋ₓMₓO₄ and a negative electrode layer of a negative electrode contains lithium titanate Li₄Ti₅O₁₂. Also, in the nonaqueous electrolyte battery, a pore specific surface area obtained by the BET method using N₂-adsorption of the positive electrode layer is 2 m²/g or more and less than 5 m²/g. The ratio of the capacity of the positive electrode per pore surface area of the positive electrode layer to the capacity of the negative electrode per pore surface area obtained by the BET method using N₂-adsorption of the negative electrode layer is within the range of 1 or more and less than 2.4. As a result, the nonaqueous electrolyte battery can exhibit excellent voltage-compatibility with lead-acid storage batteries, excellent output characteristics, and excellent charge-and-discharge cycle characteristics.

Some embodiments of the present invention have been described, but these embodiments are presented by way of example and do not intend to limit the scope of the invention. These novel embodiments can be carried out in various other forms and various omissions, substitutions, and alterations can be made without deviating from the scope of the claims. These embodiments and modifications thereof are included in the scope of the invention and also included in inventions described in claims and equivalents thereof.

### Reference Signs List

1 Nonaqueous electrolyte battery, 2 Electrode group, 3 Container, 31 Aluminum foil, 32 and 33 Resin film, 4 Positive electrode current collecting tab, 5 Negative electrode current collecting tab, 6 Positive electrode, 61 Positive electrode current collector, 62 Positive electrode layer, 63 Positive electrode lead, 7 Negative electrode, 71 Negative electrode current collector, 72 Negative electrode layer, 73 Negative electrode lead, 8 Separator, 9 Insulating film, 100 Battery system, 110 First battery, 120 Second battery, 130 Circuit switching means, 131 Electric control means (ECU), 140 Electric load, 150 Alternator, 160 Protection controlling unit

## Claims

1. A nonaqueous electrolyte battery comprising:
a positive electrode comprising a positive electrode layer, wherein the positive electrode layer comprises lithium-manganese composite oxide represented by a general formula of LiMn₂₋ₓMₓO₄, in the general formula, x is within a range of 0.22 ≤ x ≤ 0.7, and M is at least one element selected from a group consisting of Mg, Ti, Cr, Fe, Co, Zn, Al, and Ga;
a negative electrode containing a negative electrode layer, wherein the negative electrode layer comprises lithium titanate Li₄Ti₅O₁₂; and
a nonaqueous electrolyte,
wherein
a pore specific surface area obtained by a BET method using N₂-adsorption of the positive electrode layer is 2 m²/g or more and less than 5 m²/g and
a ratio of a capacity of the positive electrode per pore surface area of the positive electrode layer to a capacity of the negative electrode per pore surface area obtained by the BET method using N₂-adsorption of the negative electrode layer is within the range of 1 or more and less than 2.4.

2. The nonaqueous electrolyte battery according to claim 1, wherein the lithium-manganese composite oxide comprises Al.

3. The nonaqueous electrolyte battery according to claim 2, wherein the capacity of the positive electrode per the pore surface area of the positive electrode layer is 15 mAh/m² or more and less than 35 mAh/m².

4. The nonaqueous electrolyte battery according to claim 2, wherein the capacity of the negative electrode per the pore surface area of the negative electrode layer is 5 mAh/m² or more and less than 15 mAh/m².

5. A battery system comprising:
a first battery comprising a lead-acid storage battery; and
a second battery connected to the first battery in parallel and comprising the nonaqueous electrolyte battery according to any one of claims 1 to 4.

## Patentansprüche

1. Batterie mit nichtwässrigem Elektrolyt, umfassend:
eine positive Elektrode, die eine positive Elektrodenschicht umfasst, wobei die positive Elektrodenschicht ein Lithium-Mangan-Verbundoxid umfasst, das durch eine allgemeine Formel von LiMn₂₋ₓMₓO₄ dargestellt wird, wobei in der allgemeinen Formel x innerhalb eines Bereichs von 0,22 ≤ x ≤ 0,7 liegt und M mindestens ein Element ausgewählt aus einer Gruppe, bestehend aus Mg, Ti, Cr, Fe, Co, Zn, Al und Ga ist;
eine negative Elektrode, die eine negative Elektrodenschicht enthält, wobei die negative Elektrodenschicht Lithiumtitanat Li₄Ti₅O₁₂ umfasst; und
einen nichtwässrigen Elektrolyten,
wobei
ein porenspezifischer Oberflächenbereich, der durch ein BET-Verfahren unter Verwendung von N₂-Adsorption der positiven Elektrodenschicht erhalten wird, 2 m²/g oder mehr und weniger als 5 m²/g beträgt, und
ein Verhältnis einer Kapazität der positiven Elektrode pro Porenoberflächenbereich der positiven Elektrodenschicht zu einer Kapazität der negativen Elektrode pro Porenoberflächenbereich, die durch das BET-Verfahren unter Verwendung von N₂-Adsorption der negativen Elektrodenschicht erhalten wird, im Bereich von 1 oder mehr und weniger als 2,4 liegt.

2. Batterie mit nichtwässrigem Elektrolyt nach Anspruch 1, wobei das Lithium-Mangan-Verbundoxid Al umfasst.

3. Batterie mit nichtwässrigem Elektrolyt nach Anspruch 2, wobei die Kapazität der positiven Elektrode pro Porenoberflächenbereich der positiven Elektrodenschicht 15 mAh/m² oder mehr und weniger als 35 mAh/m² beträgt.

4. Batterie mit nichtwässrigem Elektrolyt nach Anspruch 2, wobei die Kapazität der negativen Elektrode pro Porenoberflächenbereich der negativen Elektrodenschicht 5 mAh/m² oder mehr und weniger als 15 mAh/m² beträgt.

5. Batteriesystem, umfassend:
eine erste Batterie, die eine Blei-Säure-Speicherbatterie umfasst; und
eine zweite Batterie, die parallel mit der ersten Batterie verbunden ist und die Batterie mit nichtwässrigem Elektrolyt nach einem der Ansprüche 1 bis 4 umfasst.

## Revendications

1. Batterie à électrolyte non aqueux comprenant :
une électrode positive comprenant une couche d'électrode positive, dans laquelle la couche d'électrode positive comprend de l'oxyde composite de lithium-manganèse représenté par une formule générale de LiMn₂₋ₓMₓO₄, dans la formule générale, x est dans une plage de valeurs de 0,22 ≤ x ≤ 0,7, et M est au moins un élément sélectionné à partir d'un groupe constitué par Mg, Ti, Cr, Fe, Co, Zn, Al et Ga ;
une électrode négative contenant une couche d'électrode négative, dans laquelle la couche d'électrode négative comprend du titanate de lithium Li₄Ti₅O₁₂ ; et
un électrolyte non aqueux,
dans laquelle
une surface spécifique de pore obtenue par un procédé BET utilisant une adsorption de N₂ de la couche d'électrode positive est supérieure ou égale à 2 m²/g et inférieure à 5 m²/g et
un rapport d'une capacité de l'électrode positive par surface de pore de la couche d'électrode positive sur une capacité de l'électrode négative par surface de pore obtenue par le procédé BET utilisant une adsorption de N₂ de la couche d'électrode négative est dans la plage de valeurs supérieures ou égales à 1 et inférieures à 2,4.

2. Batterie à électrolyte non aqueux selon la revendication 1, dans laquelle l'oxyde composite de lithium-manganèse comprend de l'Al.

3. Batterie à électrolyte non aqueux selon la revendication 2, dans laquelle la capacité de l'électrode positive par unité de surface spécifique des pores de la couche d'électrode positive est supérieure ou égale à 15 mAh/m² et inférieure à 35 mAh/m².

4. Batterie à électrolyte non aqueux selon la revendication 2, dans laquelle la capacité de l'électrode négative par unité de surface spécifique des pores de la couche d'électrode négative est supérieure ou égale à 5 mAh/m² et inférieure à de 15 mAh/m².

5. Système de batterie comprenant :
une première batterie comprenant une batterie de stockage au plomb-acide ; et
une deuxième batterie connectée à la première batterie en parallèle et comprenant la batterie à électrolyte non aqueux selon l'une quelconque des revendications 1 à 4.
